## Europäisches Patentamt

## European Patent Office

## Office européen des brevets

(19)

(11) Veröffentlichungsnummer: **0 253 992 B1**

# EUROPÄISCHE PATENTSCHRIFT

(12)

(45) Veröffentlichungstag der Patentschrift: **23.12.92**

(51) Int. Cl.⁵: **G01B 21/00**, G01B 5/00, G01D 5/26

(21) Anmeldenummer: **87107626.1**

(22) Anmeldetag: **26.05.87**

(54) **Positionsmesseinrichtung.**

(30) Priorität: **19.07.86 DE 3624485**

(43) Veröffentlichungstag der Anmeldung:
**27.01.88 Patentblatt 88/04**

(45) Bekanntmachung des Hinweises auf die
Patenterteilung:
**23.12.92 Patentblatt 92/52**

(84) Benannte Vertragsstaaten:
**AT CH DE ES FR GB IT LI NL SE**

(56) Entgegenhaltungen:
DE-A- 3 429 684
DE-C- 2 810 341
DE-C- 3 201 887
GB-A- 2 159 277

(73) Patentinhaber: **Dr. Johannes Heidenhain GmbH**
**Dr.-Johannes-Heidenhain-Strasse 5 Postfach 1260**
**W-8225 Traunreut(DE)**

(72) Erfinder: **Ernst, Alfons, Dipl.-Ing.**
**Traunring 62**
**W-8225 Traunreut(DE)**

EP 0 253 992 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Beschreibung

Die Erfindung betrifft eine Positionsmeßeinrichtung zur Messung der Relativlage zweier Objekte gemäß dem Oberbegriff des Anspruches 1.

Derartige Positonsmeßeinrichtungen werden insbesondere bei Bearbeitungsmaschinen zur Messung der Relativlage eines Werkzeugs bezüglich eines zu bearbeitenden Werkstücks sowie bei Koordinatenmeßmaschinen zur Ermittlung von Lage und/oder Abmessungen von Prüfobjekten eingesetzt.

Bei einer derartigen Positionsmeßeinrichtung mit einer Abtasteinheit, die an einer von der Führung der zu messenden Objekte unabhängigen Hilfsführung verschiebbar ist, ist eine gelenkige Ankopplung der Abtasteinheit am zu messenden Objekt bzw. an einen daran angebrachten Mitnehmer erforderlich.

Aus der DE-C-28 10 341 ist eine Längenmeßeinrichtung zur Messung der Relativlage zweier Objekte bekannt, bei der die Teilung eines mit dem einen Objekt verbundenen Teilungsträgers von einer mit dem anderen Objekt über einen Mitnehmer verbundenen Abtasteinheit abgetastet wird. Die Abtasteinheit wird mittels fest angebrachter Gleitschuhe und Rollen auf Führungsflächen des Teilungsträgers und auf Führungsflächen eines Gehäuses für den Teilungsträger geführt und an diese Führungsflächen mittels Federn angedrückt, die sich am Gehäuse und am Mitnehmer abstützen. Die Abtasteinheit ist ferner mit dem Mitnehmer über eine gelenkige Kupplung mit zwei rotatorischen Freiheitsgraden um zwei zueinander orthogonale Drehachsen senkrecht zur Meßrichtung in Form eines parallel zur Meßrichtung angeordneten Federdrahtes verbunden. Diese gelenkige Kupplung besitzt in Meßrichtung jedoch nur eine endliche Steifigkeit, so daß Meßfehler auftreten können.

Der GB-A-2159277 entnimmt man eine gleichartige Längenmeßeinrichtung, bei der eine Abtasteinheit ebenfalls mittels fest angebrachter Rollen auf Führungsflächen eines Teilungsträgers und eines Gehäuses geführt wird. Die Abtasteinheit ist mit einem zugehörigen Objekt über eine Kupplung verbunden, die aus einer Stange mit zwei Gelenken oder aus einer Anordnung mit drei bzw. vier Blattfedern besteht; diese Kupplung besitzt gleichfalls die vorgenannten Nachteile.

In der DE-C-32 01 887 ist eine Längenmeßeinrichtung beschrieben, bei der die Teilung eines mit einem ersten zu messenden Objekt verbundenen Teilungsträgers von einer mit einem zweiten zu messenden Objekt über einen Mitnehmer verbundenen Abtasteinheit abgetastet wird. Die Abtasteinheit wird mittels fest angebrachter Gleitschuhe und Rollen auf einer Führungsfläche des Teilungsträgers und auf einer Führungsfläche eines Gehäuses für den Teilungsträger geführt. Die Abtasteinheit ist ferner mit dem Mitnehmer über eine Kupplung verbunden, die einmal ein erstes Gelenk in Form einer ersten Blattfeder mit einem ersten rotatorischen Freiheitsgrad um eine erste Drehachse senkrecht zur Meßrichtung und ein zweites Gelenk in Form einer zweiten Blattfeder mit einem zweiten rotatorischen Freiheitsgrad um eine zur ersten Drehachse orthogonale Drehachse senkrecht zur Meßrichtung sowie eine Linearführung mit zwei translatorischen Freiheitsgraden senkrecht zur Meßrichtung aufweist. Diese beiden in Meßrichtung verlaufenden Blattfedern besitzen ebenfalls nur eine endliche Steifigkeit, so daß Meßfehler die Folge sein können; zudem ist die Linearführung einem Verschleiß unterworfen.

Der Erfindung liegt die Aufgabe zugrunde, bei einer Positionsmeßeinrichtung der genannten Gattung durch die Kupplung zwischen der Abtasteinheit und dem Objekt bedingte Meßfehler auszuschließen.

Diese Ausgabe wird erfindungsgemäß durch die kennzeichnenden Merkmale des Anspruchs 1 gelöst.

Die mit der Erfindung erzielten Vorteile bestehen insbesondere darin, daß durch das Vorsehen einer gelenkigen Kupplung mit nur einem Freiheitsgrad um eine Drehachse senkrecht zur Teilungsfläche des Teilungsträgers die Baulänge dieser Kupplung in Form einer Blattfeder in Meßrichtung so gering gehalten werden kann, daß durch die dadurch erhöhte Steifigkeit der Kupplung in Meßrichtung Meßfehler im Rahmen der geforderten Meßgenauigkeit nicht mehr auftreten können. Durch das weitere Vorsehen eines Führungsgelenks mit einem translatorischen Freiheitsgrad parallel zur Teilungsfläche des Teilungsträgers senkrecht zur Meßrichtung zur Verbindung des Führungselements mit der Abtasteinheit wird ein Parallelitätsversatz zwischen der Führung der zu messenden Objekte und der Hilfsführung ausgeglichen. Eine Längsnachgiebigkeit dieses Führungsgelenks in der bevorzugten Form eines Blattfederparallelogramms kann keine Meßfehler bewirken, da dieses Führungsgelenk nicht zwischen dem zu messenden Objekt und der Abtasteinheit angeordnet ist, sondern außerhalb des Meßzirkels der Positionsmeßeinrichtung liegt.

Vorteilhafte Weiterbildungen der Erfindung entnimmt man den abhängigen Ansprüchen.

Ausführungsbeispiele der Erfindung werden anhand der Zeichnung näher erläutert.

Es zeigen

Figur 1    schematisch eine inkrementale Längenmeßeinrichtung ein einer Seitenansicht und

Figur 2    in einer Draufsicht;

Figur 3    eine weitere inkrementale Längenmeßeinrichtung im Querschnitt und

Figur 4 eine gekapselte inkrementale Längenmeßeinrichtung im Querschnitt.

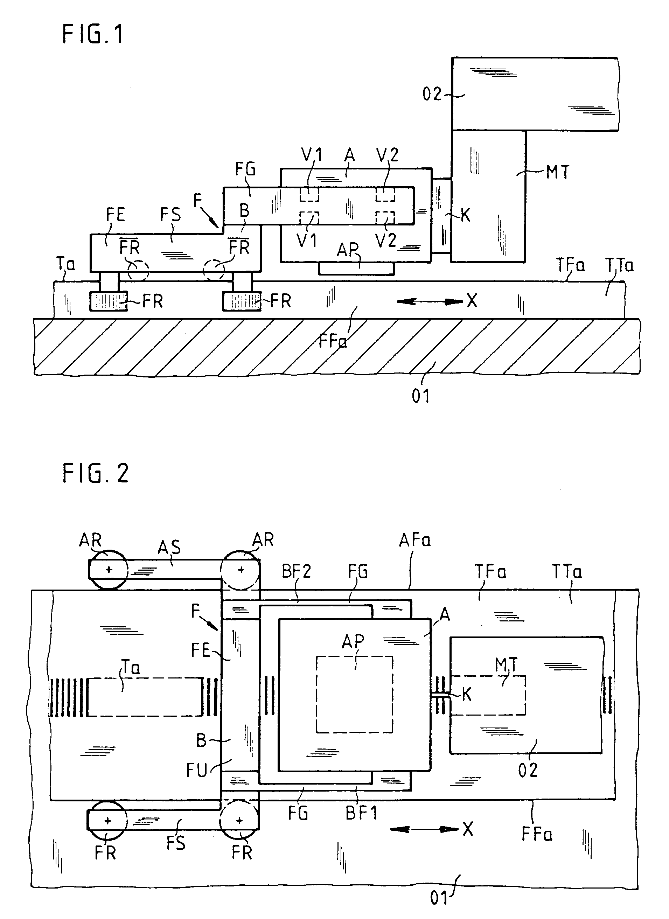

In Figur 1 ist schematisch eine inkrementale Längenmeßeinrichtung in einer Seitenansicht und in Figur 2 in einer Draufsicht dargestellt. Ein Teilungsträger TTa mit einem rechteckigen Querschnitt ist an einem Objekt 01 befestigt und weist eine Teilungsfläche TFa mit einer inkrementalen Teilung Ta auf, die von einer mit einem anderen Objekt 02 verbundenen Abtasteinheit A abgetastet wird. Die beiden Objekte 01, 02, deren gegenseitige Relativlage gemessen werden soll, werden beispielsweise durch das Bett und durch einen Schlitten einer Bearbeitungsmaschine gebildet.

Die Abtasteinheit A ist mit dem anderen Objekt 02 über einen Mitnehmer MT verbunden; zwischen dem Mitnehmer MT und der Abtasteinheit A befindet sich eine gelenkige Kupplung K mit nur einem rotatorischen Freiheitsgrad um eine Drehachse senkrecht zur Teilungsfläche TFA des Teilungsträgers TTa in der bevorzugten Form einer Blattfeder, die durch eine kurze Baulänge eine hohe Steifigkeit in Meßrichtung X sowie eine ausreichende Flexibilität um die Drechachse senkrecht zur Teilungsfläche TFa des Teilungsträgers TTa aufweist.

Die gelenkige Kupplung K in Form der Blattfeder besitzt senkrecht zur Teilungsfläche TFa des Teilungsträgers TTa eine ausreichende Bauhöhe zur Abstützung der Abtasteinheit A, so daß die Abtasteinheit A nicht auf der Teilungsfläche TFa, beispielsweise mittels Rollen, abgestützt und geführt zu werden braucht. Zur Abtastung der Teilung Ta des Teilungsträgers TTa besitzt die lichtelektrische Abtasteinheit A in bekannter Weise eine Abtastplatte AP mit einer Abtastteilung, eine Beleuchtungseinheit sowie wenigstens ein Photoelement.

Zur Führung der Abtasteinheit A parallel zur Meßrichtung X ist eine Führungseinrichtung F mit einem Führungselement FE sowie mit einem Führungsgelenk FG vorgesehen. Das Führungselement FE besteht aus einem U-förmigen Führungsrahmen FU, dessen einer zur Meßrichtung X paralleler Führungsschenkel FS zwei in Meßrichtung X beabstandete starr befestigte Führungsrollen FR aufweist, die an einer zur Teilungsfläche TFa des Teilungsträgers TTa senkrechten und zur Meßrichtung X parallelen Führungsfläche FFa des Teilungsträgers TTa anliegen. Zum Andrücken der beiden Führungsrollen FR an die Führungsfläche FFa des Teilungsträgers TTa weist ein zur Meßrichtung X paralleler Andruckschenkel AS des Führungsrahmens FU zwei in Meßrichtung X beabstandete federbelastete Andrucksrollen AR auf, die an einer Andrucksfläche AFa des Teilungsträgers TTa angreifen, die der Führungsfläche FFa des Teilungsträgers TTa parallel gegenüberliegt.

Das Führungselement FE ist mit der Abtasteinheit A über das Führungsgelenk FG in Form eines Blattfederparallelogramms mit einem translatorischen Freiheitsgrad senkrecht zur Meßrichtung X und parallel zur Teilungsfläche TFa des Teilungsträgers TTa verbunden. Das Blattfederparallelogramm besteht aus zwei Blattfedern BF1, BF2, die an der Basis B des Führungselements FE und an den Seitenflächen der Abtasteinheit A befestigt sind. Die beiden Blattfedern BF1, BF2 haben senkrecht zur Teilungsfläche TFa des Teilungsträgers TTa eine ausreichende Bauhöhe zur Abstützung des Führungselements FE, so daß das Führungselement FE nicht auf der Teilungsfläche TFa des Teilungsträgers TTa geführt zu werden braucht. Eine solche Führung des Führungselements FE mittels Führungsrollen $\overline{FR}$ auf der Teilungsfläche TFa des Teilungsträgers TTa ist in gestrichelter Form dargestellt; zu diesem Zweck weisen die beiden Blattfedern BF1, BF2 des Führungsgelenks FG jeweils zwei Querschnittsverminderungen V1, V2 auf, so daß das Führungsgelenk FG in diesem Fall einen weiteren translatorischen Freiheitsgrad senkrecht zur Meßrichtung X und senkrecht zur Teilungsfläche TFa des Teilungsträgers TTa besitzt.

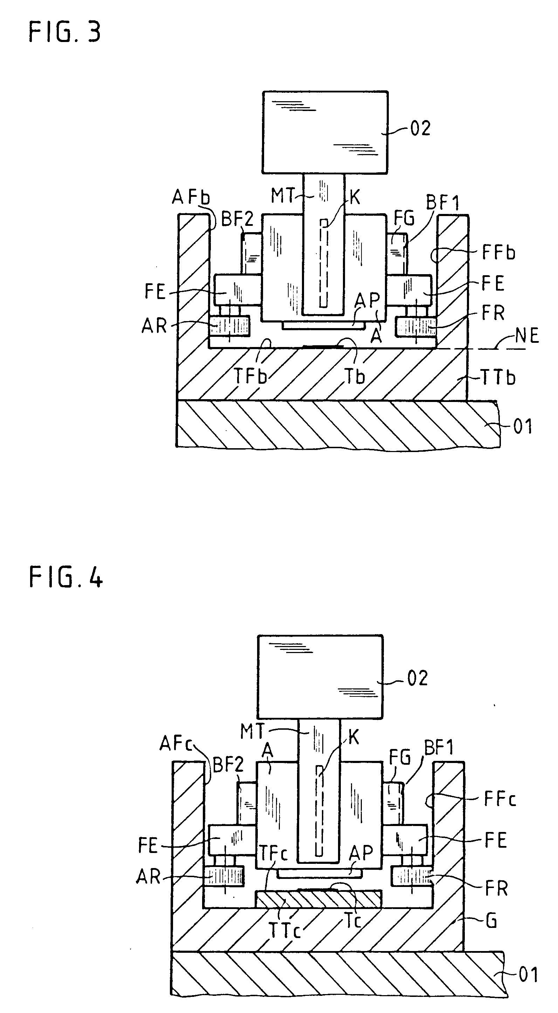

In Figur 3 ist eine weitere inkrementale Längenmeßeinrichtung im Querschnitt dargestellt, bei der der Teilungsträger TTb aus einem U-förmigen Profil besteht. Die Teilungsfläche TFb mit der Teilung Tb befindet sich am Grund des Teilungsträgers TTb, vorzugsweise in seiner neutralen Ebene NE. Die weiteren Elemente der Figur 3 sind mit den entsprechenden Elementen der Figuren 1 und 2 identisch und besitzen dieselben Bezugszeichen. Als Führungsfläche FFb für die Führungsrollen FR und als Andruckfläche AFb für die Andrucksrollen AR des Führungselements FE diener die beiden seitlichen Innenflächen des U-förmigen Teilungsträgers TTb.

In Figur 4 ist eine gekapselte inkrementale Längenmeßeinrichtung im Querschnitt gezeigt, bei der ein Teilungsträger TTc mit einem rechteckigen Querschnitt auf dem Grund eines mit dem Teilungsträger TTc verbundenen Körpers G in Form eines U-förmigen Gehäuses für den Teilungsträger TTc und die Abtasteinheit A angeordnet ist; der Teilungsträger TTc weist eine Teilung Tc in einer Teilungsfläche TFc auf. Die weiteren Elemente der Figur 4 sind mit den entsprechenden Elementen der Figuren 1 und 2 identisch und besitzen dieselben Bezugszeichen. Als Führungsfläche FFc für die Führungsrollen FR und als Andrucksfläche AFc für die Andrucksrollen AR des Führungselements FE dienen die beiden seitlichen Innenflächen des U-förmigen Gehäuses G.

Die gelenkige Kupplung K verhindert aufgrund ihrer erhöhten Steifigkeit in Meßrichtung X Meßfehler im Rahmen der geforderten Meßgenauigkeit und bewirkt aufgrund ihres rotatorischen Freiheitsgrades um eine Drehachse senkrecht zur Teilungsfläche TF des Teilungsträgers TT den Ausgleich von Winkelabweichungen zwischen der Führung der zu messenden Objekte 01, 02 und der Hilfsführung in Form der Führungsfläche FF des Teilungsträgers TT. Das Führungsgelenk FG der Führungseinrichtung F bewirkt aufgrund seines translatorischen Freiheitsgrades senkrecht zur Meßrichtung X und parallel zur Teilungsfläche TF des Teilungsträgers TT den Ausgleich des Parallelitätsversatzes zwischen der Führung der zu messenden Objekte 01, 02 und der Hilfsführung in Form der Führungsfläche FF des Teilungsträgers TT.

Die Erfindung ist mit Erfolg sowohl bei inkrementalen als auch bei absoluten Positionsmeßeinrichtungen einsetzbar und zwar gleichermaßen bei lichtelektrischen, magnetischen, kapazitiven und induktiven Meßeinrichtungen.

Ebenfalls ist die Erfindung mit Erfolg bei interferometrischen Positionsmeßeinrichtungen einsetzbar, bei denen ein größerer Abtastabstand zwischen der Teilungsfläche des Teilungsträgers und der Abtastplatte der Abtasteinheit mit erhöhten Abstandstoleranzen ermöglicht wird; eine solche interferometrische Positionsmeßeinrichtung ist beispielsweise in der DE-C-24 31 551 beschrieben.

## Patentansprüche

1. Positionsmeßeinrichtung, insbesondere interferometrische Positionsmeßeinrichtung, zur Messung der Relativlage zweier Objekte (01, 02), bei der die Teilung (Ta, Tb, Tc) in einer Teilungsfläche (TFa, TFb, TFc) eines mit dem einen Objekt (01) verbundenen Teilungsträgers (TTa, TTb, TTc) von einer Abtasteinheit (A) abgetastet wird, die am anderen Objekt (02) über eine in Meßrichtung (X) angeordnete gelenkige Kupplung (K) angekoppelt und mittels einer Führungseinrichtung (F), parallel zur Meßrichtung (X) am Teilungsträger (TTa, TTb, TTc) und/oder an einem mit dem Teilungsträger (TTa, TTb, TTc) verbundenen Körper (G) als einer von der Führung der zu messenden Objekte (01, 02) unabhängigen Hilfsführung geführt ist, dadurch gekennzeichnet, daß die gelenkige Kupplung (K) zwischen der Abtasteinheit (A) und dem anderen Objekt (02) nur einen rotatorischen Freiheitsgrad besitzt, dessen Drehachse senkrecht zur Teilungsfläche (TFa, TFb, TFc) des Teilungsträgers (TTa, TTb, TTc) verläuft, und daß die Führungseinrichtung (F) ein Führungselement (FE) zur Führung der Abtasteinheit (A) parallel zur Meßrichtung X an einer zur Teilungsfläche (TFa, TFb, TFc) des Teilungsträgers (TTa, TTb, TTc) senkrechten Führungsfläche (FFa, FFb, FFc) des Teilungsträgers (TTa, TTb, TTc) oder des mit dem Teilungsträger (TTa, TTb, TTc) verbundenen Körpers (G) sowie ein Führungsgelenk (FG) mit wenigstens einem translatorischen Freiheitsgrad senkrecht zur Meßrichtung (X) zur Verbindung des Führungselementes (FE) mit der Abtasteinheit (A) aufweist.

2. Meßeinrichtung nach Anspruch 1, dadurch gekennzeichnet, daß die gelenkige Kupplung (K) aus einer Blattfeder besteht.

3. Meßeinrichtung nach Anspruch 1, dadurch gekennzeichnet, daß das Führungselement (FE) der Führungseinrichtung (F) aus einem U-förmigen Führungsrahmen (FU) mit einer Basis (B), mit einem Führungsrollen (FR) aufweisenden Führungsschenkel (FS) und mit einem parallel zum Führungsschenkel (FS) angeordneten Andruckschenkel (AS) mit federbelasteten Andruckrollen (AR) besteht.

4. Meßeinrichtung nach Anspruch 1, dadurch gekennzeichnet, daß das Führungsgelenk (FG) aus einem Blattfederparallelogramm mit zwei Blattfedern (BF1, BF2) besteht, die an der Basis (B) des Führungselements (FE) und an den Seitenflächen der Abtasteinheit (A) befestigt sind.

5. Meßeinrichtung nach Anspruch 3, dadurch gekennzeichnet, daß das Führungselement (FE) weitere Führungsrollen ($\overline{FR}$) zur Führung auf der Teilungsfläche (TFa) des Teilungsträgers (TTa) aufweist.

6. Meßeinrichtung nach Anspruch 4, dadurch gekennzeichnet, daß die Blattfedern (BF1, BF2) jeweils zwei Querschnittsverminderungen (V1, V2) aufweisen.

7. Meßeinrichtung nach Anspruch 1, dadurch gekennzeichnet, daß der Teilungsträger (TTb) ein U-förmiges Profil mit in der neutralen Ebene (NE) liegender Teilungsfläche (TFb) aufweist.

8. Meßeinrichtung nach Anspruch 1, dadurch gekennzeichnet, daß der mit dem Teilungsträger (TTc) verbundene Körper (G) als Gehäuse für den Teilungsträger (TTc) und die Abtasteinheit (A) ausgebildet ist.

## Claims

1. A Position measuring device, especially an interferometric position measuring device, for measuring the relative position of two objects (01, 02), in which the graduation (Ta, Tb, Tc) on a graduation surface (TFa, TFb, TFc) of a graduation carrier (TTa, TTb, TTc) connected to one object (01) is sensed by a sensing unit (A) which is coupled to the other object (02) through an articulated coupling (K) arranged in the measuring direction (X) add is guided by means of a guide device (F) parallel to the measuring direction (X) on the graduation carrier (TTa, TTb, TTc) and/or on a body (G) connected to the graduation carrier (TTa, TTb, TTc) as an auxiliary guide independent of the guiding of the objects (01, 02) to be measured, characterized in that the articulated coupling (K) between the sensing unit (A) and the other object (02) has only a rotational degree of freedom, the axis of rotation of which runs perpendicular to the graduation surface (TFa, TFb, TFc) of the graduation carrier (TTa, TTb, TTc), and in that the guide device (F) comprises a guide element (FE) for guiding the sensing unit (A) parallel to the measuring direction (X) on a guide surface (FFa, FFB, FFc) of the graduation carrier (TTa, TTb, TTc) of the graduation carrier (TTa, TTb, TTc) or of the body (G) connected to the graduation carrier (TTa, TTb, TTc), which guide surface is perpendicular to the graduation surface (TFa, TFb, TFc), as well as a guide link (FG) with at least one translational degree of freedom perpendicular to the measuring direction (X) for coupling the guide element (FE) to the sensing unit (A).

2. A measuring device according to claim 1, characterized in that the articulated coupling (K) consisting of a leaf spring.

3. A measuring device according to claim 1, characterized in that the guide element (FE) of the guide device (F) consists of a U-shaped guide frame (FU) with a base (B), a guide arm (FS) having guide rollers (FR) and pressure arm arranged parallel to the guide arm (FS) and having spring-loaded pressure rollers (AR).

4. A measuring device according to claim 1, characterized in that the guide link (FG) consists of a leaf spring parallelogram with two leaf springs (BF1, BF2), which are fixed to the base (B) of the guide element (FE) and to the side surfaces of the sensing unit (A).

5. A measuring device according to claim 3, characterized in that the guide element (FE) has further guide rollers (FR) for guiding on the graduation surface (TFa) of the graduation carrier (TTa).

6. A measuring device according to claim 4, characterized in that the leaf springs (BF1, BF2) each have two reductions in cross-section (V1, V2).

7. A measuring device according to claim 1, characterized in that the graduation carrier (TTb) has a U-shaped profile with a graduation surface (TFb) lying in the neutral plane (NE).

8. A measuring device according to claim 1, characterized in that the body (G) connected to the graduation carrier (TTc) is formed as a housing for the graduation carrier (TTc) and the sensing unit.

**Revendications**

1. Dispositif de mesure de position, en particulier dispositif de mesure de position par interférométrie, pour la mesure de la position relative de deux objets (01, 02), dans lequel la graduation (Ta, Tb, Tc) appartenant à une surface de graduation (TFa, TFb, TFc) d'un support de graduation (TTa, TTb, TTc) lié à l'un des objets (01) est lue par une unité de lecture (A) qui est liée à l'autre objet (02) par l'intermédiaire d'un accouplement (K) flexible placé dans la direction de mesure (X) et est guidée par l'intermédiaire d'un dispositif de guidage (F) parallèlement à la direction de mesure (X) sur le support de graduation (TTa, TTb, TTc) et/ou sur un corps (G) lié au support de graduation (TTa, TTb, TTc) en tant que dispositif de guidage auxiliaire indépendant du dispositif de guidage des objets à mesurer (01, 02), caractérisé par le fait que l'accouplement flexible (K) entre l'unité de lecture (A) et l'autre objet (02) ne présente qu'un degré de liberté en rotation dont l'axe de rotation est perpendiculaire à la surface de graduation (TFa, TFb, TFc) et que le dispositif de guidage (F) comporte un élément de guidage (FE) pour le guidage de l'unité de lecture (A) parallèlement à la direction de mesure (X) sur une surface de guidage (FFa, FFb, FFc) perpendiculaire à la surface de graduation (TFa, TFb, TFc) du support de graduation (TTA, TTb, TTc) ou du corps (G) lié au support de graduation (TTa, TTb, TTc) ainsi qu'une articulation de guidage (FG) avec au moins un degré de liberté en translation perpendiculairement à la direction de mesure (X) qui relie l'élément de guidage (FE) à l'unité de lecture (A).

2. Dispositif de mesure selon la revendication 1, caractérisé par le fait que l'accouplement flexible (K) est constitué par un ressort à lames.

**3.** Dispositif de mesure selon la revendication 1, caractérisé par le fait que l'élément de guidage (FE) du dispositif de guidage (F) est constitué par un châssis de guidage (FU) en forme de U comportant une base (B), une aile de guidage (FS) avec un galet de guidage (FR) et une aile de pression (AS) qui est parallèle à l'aile de guidage (FS) et est munie de galets de pression (AR) sollicités par des ressorts.

**4.** Dispositif de mesure selon la revendication 1, caractérisé par le fait que l'articulation de guidage (FG) est constituée par un parallèlogramme de ressorts à lames avec deux ressorts à lames (BF1, BF2) qui sont fixés sur la base (B) de l'élément de guidage (FE) et sur les surfaces latérales de l'unité de lecture (A).

**5.** Dispositif de mesure selon la revendication 3, caractérisé par le fait que l'élément de guidage (FE) comporte des galets de guidage (FR) supplémentaires pour le guidage sur la surface de graduation (TFa) du support de graduation (TTa).

**6.** Dispositif de mesure selon la revendication, caractérisé par le fait que les ressorts à lames (BF1, BF2) présentent chacun deux restrictions de section (V1, V2).

**7.** Dispositif de mesure selon la revendication 1, caractérisé par le fait que le support de graduation (TTb) présente un profil en U avec une surface de graduation (TFb) située dans le plan (NE) neutre.

**8.** Dispositif de mesure selon la revendication 1, caractérisé par le fait que le corps (G) lié au support de graduation (TTc) est réalisé sous la forme de boîtier pour le support de graduation (TTc) et l'unité de lecture (A).

FIG.1

FIG. 2

FIG. 3

FIG. 4